# EUROPEAN PATENT APPLICATION

(11) **EP 1 728 609 A1**
(43) Date of publication of application: **06.12.2006**
(21) Application number: 05726708.0
(22) Date of filing: 16.03.2005
(51) Int. Cl.: B29C 33/04, B29C 35/04, B29K 21/00, B29K 105/24, B29L 30/00

(54) **METHOD OF VULCANIZATION MOLDING OF RUBBER MATERIAL**

(30) Priority: 22.03.2004 JP 2004082054
(71) Applicant: Bridgestone Corporation, Tokyo 104-8340 (JP)
(72) Inventor: FUKASAWA, Yoshichika, Bridgestone Corporation, Kodaira-shi, Tokyo 1878531 (JP); FUJI, Mahito, Bridgestone Corporation, Kodaira-shi, Tokyo 1878531 (JP)
(74) Representative: Whalley, Kevin
(86) International application number: PCT/JP2005/004691
(87) International publication number: WO 2005/090042

(57) **Abstract**

A method of vulcanization-molding a rubber material, in which lengths of vent-spews and protrusions in a rubber product can be shortened to an extent not damaging an appearance of the product without removing through trimming and without obstructing the discharge of enclosed air or the like and there is not caused a fear that vent-holes and the like are clogged with broken vent-spews and the like, is provided by heating a vulcanization mold and pushing the rubber material onto a shaping face of the mold through a pressure supplied to an interior of the mold, wherein a low-pressure fluid is supplied to the interior of the mold at an initial stage of the vulcanization molding and thereafter the pressure of the fluid is increased stepwise or stepless.

## Description

### TECHNICAL FIELD

This invention relates to a method of vulcanization-molding a rubber material capable of rendering, for example, into a green tire, and more particularly, it proposes a technique of shortening lengths of vent-spews, protrusions and the like generated in a rubber product due to the discharge of air or the like enclosed in a mold and others when the rubber material is vulcanization-molded in a vulcanization mold by heating under pressure.

### RELATED ART

For example, when a green tire is vulcanization-molded in a vulcanization mold by heating under pressure, it is common to supply a high-pressure fluid or a high-temperature, high-pressure heat medium fluid to an interior of the green tire inside the vulcanization mold from a time of starting the vulcanization molding for the purpose of shortening the vulcanization time and enhancing the productivity of a tire product.

### PROBLEMS TO BE SOLVED BY THE INVENTION

However, when the high-pressure fluid is rapidly supplied to the interior of the green tire inside the vulcanization mold from the start of the vulcanization molding, a part of the rubber material flows at a relatively long length into each vent-hole of the vulcanization mold with air or the like enclosed therein in cooperation with insufficient vulcanizing-progression of the rubber material or deeply penetrates into a gas venting gap between constitutional members of the mold or the like, and hence long vent-spews, protrusions and the like are generated in a rubber product. As a result, there are problems that a trimming step for removing the spews and the like from the rubber product is required and a part of the protrusions or the like damages the appearance of the product even after the removal by trimming.

On the other hand, the long vent-spews or protrusions frequently remain in the vent-holes or the like due to the breakage in the taking out of the rubber product from the vulcanization mold. As a result, there is another problem that an operation step for removing the broken remaining pieces is required.

It is, therefore, an object of the invention to solve the above problems of the conventional techniques and to provide a method of vulcanization-molding a rubber material wherein the lengths of the vent-spews and protrusions in the rubber product can be shortened to an extent not damaging the appearance of the product without obstructing the smooth discharge of air or the like enclosed in the vulcanization mold and without removing through trimming and there is not also caused a fear of clogging the vent-holes and the like with the broken vent-spews and the like.

### MEANS FOR SOLVING PROBLEMS

According to the invention, there is the provision of a method of vulcanization-molding a rubber material by heating a vulcanization mold and pushing the rubber material onto a shaping face of the mold through a pressure supplied to an interior of the mold, wherein a low-pressure fluid, for example, a fluid with a pressure corresponding to 20-40% of a final pressure is supplied to the interior of the mold at an initial stage of the vulcanization molding and thereafter the pressure of the fluid is increased stepwise or stepless to the final pressure.

In this case, it is preferable that when the vulcanization of the rubber material is run from not only the side of the vulcanization mold but also the pressure fluid, a heat medium fluid being at not only a low pressure but also a low temperature is supplied to the interior of the mold at the initial stage of the vulcanization molding and thereafter the temperature of the fluid is also increased stepwise or stepless.

Also, the vulcanization molding method can be carried out selectively supplying two heat medium fluids having different pressures and temperatures to the interior of the vulcanization mold and switching over the heat medium fluid toward a high-pressure and high-temperature side only one times on the way of the vulcanization molding, or by supplying, for example, a room temperature inert gas having a pressure higher than those of the above fluids to the vulcanization mold after the supply of the fluids to the mold.

Further, when the rubber material is a green tire for a passenger car tire and the heat medium fluid is steam, it is preferable that a time at the initial stage of the vulcanization molding is within a range of 0.5-3 minutes and a pressure of the steam supplied to the vulcanization mold in such a time is within a range of 0.5-1.0 MPa.

### EFFECT OF THE INVENTION

According to the invention, the low-pressure fluid having, for example, a pressure corresponding to 20-40% of the final pressure is supplied to the interior of the vulcanization mold under heating at the initial stage of the vulcanization molding, whereby the pushing pressure of the rubber material, which does not yet start the vulcanization and is easily fluidizable, onto the shaping face of the mold is made relatively small and hence the amount of the rubber material flown into the vent-holes or the like can be sufficiently suppressed to a small extent as compared with the conventional technique that the pressure supplied at the initial stage is made rapidly high.

Also, the pressure supplied is gradually increased ex-post or stepwise increased to sufficiently mold the rubber material and to gradually enhance the denseness in the interior of the rubber material, whereby the penetration of the rubber material into the vent-holes or the like can be effectively prevented in cooperation with the progress of the vulcanization of the rubber material.

Thus, according to the invention, the pressure sullied at the initial stage of the vulcanization molding is set to a low value, whereby the discharge of the enclosed air or the like can be conducted sufficiently smoothly and surely and also the length of the vent-spews or protrusions produced in the rubber product can be controlled to a considerably small length as compared with the conventional technique, and hence the deterioration of the appearance in the rubber product can be effectively prevented irrespectively of the removal of the vent-spews and the like through the trimming. Also, there can be prevented that top portions of the vent-spews and the like are broken and retained in the vent-holes and the like and hence the operation of removing the broken pieces is useless.

In case of using steam as a heat medium fluid, when the pressure supplied at the initial stage of the vulcanization molding is made relatively low, the heating temperature is also dropped and hence the heat quantity sullied to the rubber material becomes less. When such a state is maintained, a time for supplying a total adequate heat quantity supplied to the rubber material, i.e. a vulcanization time becomes necessarily long. In this case, the pressure and temperature of the heat medium fluid are increased on the way of the vulcanization molding to promote the vulcanization rate, whereby the lengthening of the vulcanization time and hence the deterioration of the vulcanization molding efficiency can be prevented.

Further, the above vulcanization method can be carried out simply and easily by selectively supplying two heat medium fluids having different pressures and temperatures to the interior of the vulcanization mold.

After the supply of the heat medium fluids to the vulcanization mold, the molding action or the like to the rubber material can be more enhanced by supplying an inert gas having a pressure higher than those of these fluids, for example, a room temperature inert gas of about 30±10°C to the mold.
Also, when a high-temperature inert gas is pumped, it is possible to supplement a lacking of heat quantity when the low-temperature heat medium fluid is supplied at the initial stage of the vulcanization molding.
Moreover, warm water and hot air can be used as the heat medium fluid in addition to the above steam, and the temperature of such a fluid can be controlled independently of the pressure supplied.

### BRIEF DESCRIPTION OF THE DRAWINGS

FIG. 1 is a schematically section view of a main part according to an embodiment of the invention;
FIG. 2 is a graph showing an embodiment of varying a pressure supplied;
FIG. 3 is a schematic view of a piping arrangement usable for carrying out the invention;
FIG. 4 is a graph showing a relation between initial pressure and vent-spew length; and
FIG. 5 is a graph showing a relation between initial pressure and protrusion length.

### BEST MODE FOR CARRYING OUT THE INVENTION

An embodiment of the invention will be described with respect to a case that a green tire as an example of a rubber material is vulcanization-molded in a vulcanization mold under heating.

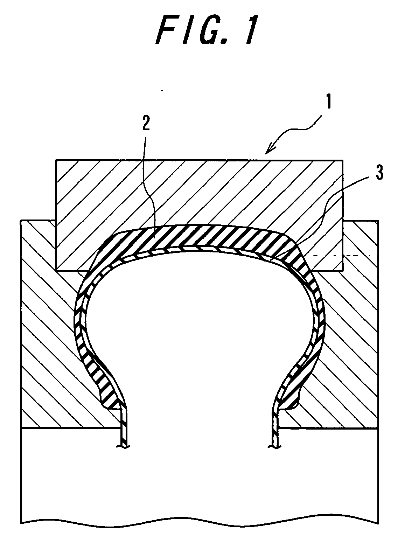

FIG. 1 is a schematically section view of a main part showing a state that the green tire is vulcanization-molded in the vulcanization mold of a clamping posture, wherein numeral 1 is a vulcanization mold, numeral 2 a green tire housed in the mold 1, and numeral 3 a bladder.
Now, the bladder 3 pushes the green tire 2 onto an inner shaping face of the vulcanization mold 1 depending on the pressure and temperature of a heat medium fluid supplied to the inside of the bladder and functions a heat quantity of the heat medium fluid from the inside of the bladder to the green tire 2.

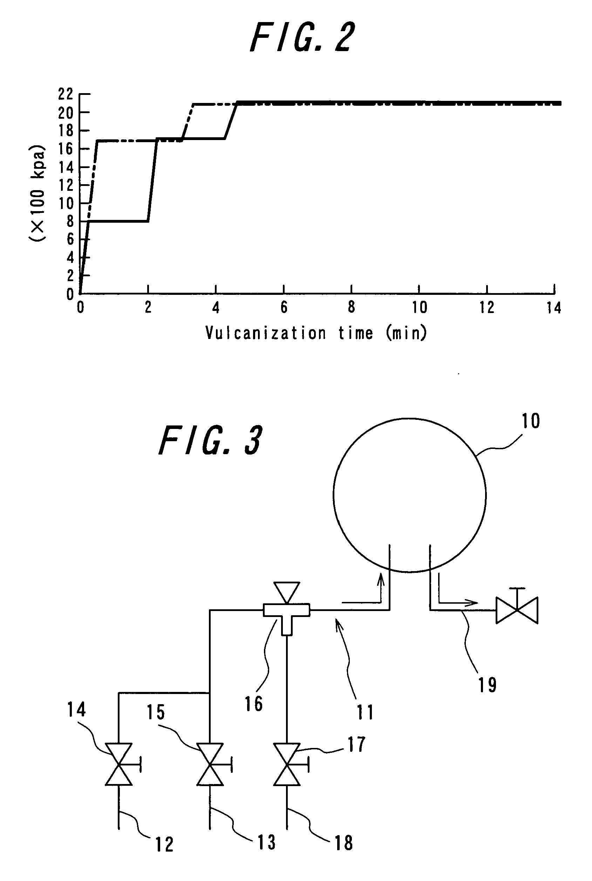

In this embodiment, when the green tire 2 is vulcanization-molded as illustrated, steam as the heat medium fluid supplied to the inside of the bladder 3 is a pressure of 800 kPa and a temperature of 170°C at the initial stage of the vulcanization molding as shown, for example, by a solid line in FIG. 2, whereby air or the like enclosed in the vulcanization mold 1 is discharged smoothly and surely from vent-holes or the like not shown and the outside face of the green tire 2 is closed to the shaping face of the mold, while the vulcanization molding of the green tire 2 is started in cooperation with the supply of heat quantity from the side of the mold to the green tire 2. When such a state is maintained for 2 minutes, the vulcanization of the green tire 2 is somewhat promoted, while a portion of the green tire penetrated into the vent-hole or the like is sufficiently prevented to more penetrate into the interior of the vent-hole.

Thereafter, the pressure of the steam is increased to 1700 kPa substantially equal to a set pressure in the conventional technique as shown by a phantom line, whereby the temperature of the steam is raised to 204°C, which promotes the vulcanization rate of the green tire. After such a state is maintained for 2 minutes, an inert gas of 40°C is filled in the mold 1 under a pressure of 2100 kPa, and such a state is maintained for 10 minutes.
In this case, the charged time of the inert gas is not counted as a time of heat quantity supplied.

When the above operation is compared with the pressure control of the conventional technique shown by the phantom line, i.e. the pressure control wherein the pressure and temperature of the steam are 1700 kPa and 204°C for 3 minutes of the initial vulcanization stage and then the inter gas is supplied, the lacking of heat quantity in the heat medium fluid resulted from the fact that the pressure and temperature are set to low values for 2 minutes of the initial vulcanization stage can be supplemented by delaying the supply timing of the inert gas to supply a greater amount of heat quantity from the inside of the bladder to the green tire 2, whereby the total heat quantity supplied to the green tire 2 can be made to an adequate heat quantity at the same vulcanization time as in the conventional technique.
In other words, according to the invention, the heat quantity supplied at the initial stage of the vulcanization molding, which becomes lacking as compared with the conventional technique, is supplemented by supplying a greater heat quantity from the inside of the green tire on the way of the vulcanization, whereby the green tire can be rendered into a tire product without prolonging the vulcanization time.

Moreover, the pressure of the heat medium fluid is changed stepwise to three stages in the embodiment of FIG. 2, but it can be changed to two stage or multi-stages of four or more, or may be changed stepless by the opening control of a reducing valve or the like.

FIG. 3 is a schematic view of a piping arrangement when the pressure of the steam is switched over two stages and the inert gas is supplied. In this case, a low-pressure steam supply system 12 and a high-pressure steam supply system 13 are connected through switching valves 14, 15 to a pressure supply pipe conduit 11 for a vulcanizing machine 10, respectively, while an inert gas supply system 18 is connected thereto through a three way valve 16 and a switching valve 17. Also, a heat medium fluid pipe conduit 19 provided with a switching valve is connected to the vulcanizing machine 10.

According to the piping arrangement, therefore, the steam supplied through each system is cycled in the vulcanization mold 1 housed in the vulcanizing machine 10 but also can retain in the vulcanization mold 1 under the closing of the pipe conduit 19.

The embodiment of the invention using the illustrated piping arrangement can be conducted by opening the switching valve 14 at the initial stage of the vulcanization molding for the green tire 2 to supply a low-pressure steam through the pressure supply pipe conduit 11 to the vulcanizing machine 10 and hence the vulcanization mold 1, closing the switching valve 14 after a predetermined time from the start of supplying the low-pressure steam, opening the switching valve 15 to supply a high-pressure steam to the vulcanization mold 1 for a given time, and then operating the three way valve 16 and the switching valve 17 under the closing of the switching valve 15 to supply an inert gas to the mold 1 for a given time, whereby the action and effect as mentioned above can be attained.

### EXAMPLE 1

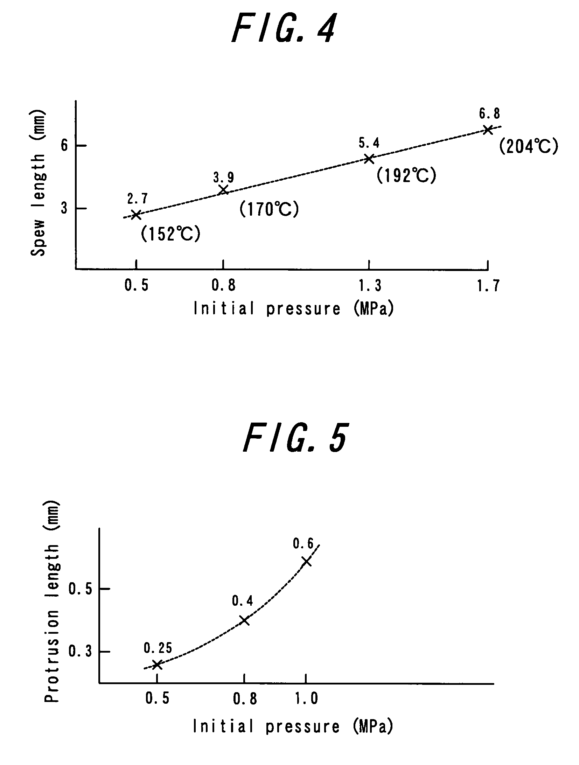

When a product tire having a size of 205/60 R15 is manufactured by using a vulcanization mold provided with 60 vent-holes each having a diameter of 0.6 mm, an average length of vent-spews generated in the product tire is measured by varying a pressure supplied at an initial stage of vulcanization molding to obtain results shown by a graph in FIG. 4.
As seen from this graph, when the initial pressure is less than 1.0 MPa, the length of the vent-spew can be largely reduced as compared with the conventional technique using a usual initial pressure (1.7 MPa).

### EXAMPLE 2

When the product tire having the same size as in Example 1 is manufactured by using a vulcanization mold provided with 80 vent-slits each having a width of 0.04 mm, the initial pressure is varied within a range of not more than 1.0 MPa to obtain an average length of protrusions generated in the product tire as shown by a graph in FIG. 5.
As seen from the above, the protrusion length becomes shorter as the initial pressure becomes small likewise the case of the vent-spew, and particularly the initial pressure of not more than 0.8 MPa is effective.

## Claims

1. A method of vulcanization-molding a rubber material by heating a vulcanization mold and pushing the rubber material onto a shaping face of the mold through a pressure supplied to an interior of the mold, wherein a low-pressure fluid is supplied to the interior of the mold at an initial stage of the vulcanization molding and thereafter the pressure of the fluid is increased stepwise or stepless.

2. A method of vulcanization-molding a rubber material according to claim 1, wherein a low-temperature fluid is supplied to the interior of the vulcanization mold at the initial stage of the vulcanization molding and thereafter the temperature of the fluid is increased stepwise or stepless.

3. A method of vulcanization-molding a rubber material according to claim 1 or 2, wherein two fluids having different pressures and temperatures are selectively supplied to the interior of the vulcanization mold.

4. A method of vulcanization-molding a rubber material according to any one of claims 1 to 3, wherein after the supply of the fluids to the interior of the vulcanization mold, an inert gas having a pressure higher than those of the fluids is supplied to the mold.

5. A method of vulcanization-molding a rubber material according to any one of claims 1 to 4, wherein the fluid is a steam, a warm water or a hot air.

6. A method of vulcanization-molding a rubber material according to any one of claims 1 to 5, wherein a time at the initial stage of the vulcanization molding is within a range of 0.5-3 minutes and a pressure of a steam supplied to the vulcanization mold in such a time is within a range of 0.5-1.0 MPa.
